# EUROPEAN PATENT SPECIFICATION

(11) **EP 4 054 990 B1**
(45) Date of publication and mention of the grant of the patent: **04.09.2024**
(21) Application number: 20884484.5
(22) Date of filing: 04.11.2020
(51) Int. Cl.: C04B 20/02, C04B 26/26, C04B 28/04, C04B 103/60, C04B 103/61

(54) **A MECHANICALLY CARBOXYLATED FLY ASH, METHODS OF ITS PRODUCTION AND USES THEREOF**
MECHANISCH CARBOXYLIERTE FLUGASCHE, VERFAHREN ZU DEREN HERSTELLUNG UND VERWENDUNGEN DAVON
CENDRE VOLANTE MÉCANIQUEMENT CARBOXYLÉE, SES PROCÉDÉS DE PRODUCTION ET SES UTILISATIONS

(30) Priority: 05.11.2019 EP 19207206
(43) Date of publication of application: 14.09.2022
(73) Proprietor: Carbon Upcycling Technologies Inc., Calgary, AB T3S 0A2 (CA)
(72) Inventor: SINHA, Apoorv, Calgary, Alberta T3S 0A2 (CA)
(74) Representative: Nederlandsch Octrooibureau
(86) International application number: PCT/CA2020/051493
(87) International publication number: WO 2021/087605

(56) References cited:
- WO-A1-2019/012474
- WO-A1-2019/012474
- JINGJING FENG ET AL: "The Influence of Ground Fly Ash on Cement Hydration and Mechanical Property of Mortar", ADVANCES IN CIVIL ENGINEERING, vol. 2018, 1 January 2018 (2018-01-01), pages 1 - 7, XP055689092, ISSN: 1687-8086, DOI: 10.1155/2018/4023178
- FUKUOKA ET AL.: "Mechanochemical Synthesis of a Carboxylated Carbon Catalyst and Its Application in Cellulose Hydrolysis", CHEMCATCHEM, vol. 8, 2013, pages 10 59 - 1064, XP055821922
- KUMAR ET AL.: "Mechanical activation of fly ash: Effect of reaction, structure and properties of resulting geopolymer", CERAMICS INTERNATIONAL, vol. 37, 2011, pages 533 - 541, XP027558930
- ANANDHAN ET AL.: "Influence of planetary ball milling parameters on the mechano-chemical activation of fly ash", POWDER TECHNOLOGY, vol. 281, 2015, pages 151 - 158, XP029232816, DOI: 10.1016/j.powtec.2015.04.078

## Description

### Field of the invention

The present invention relates to a mechanically carboxylated fly ash. The invention further relates to methods of its production and uses thereof, for example as a filler. The invention further relates to compositions comprising the mechanically carboxylated fly ash and a further material selected from the group consisting of asphalt, cement, polymers and combinations thereof and methods of their production.

### Background art

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 10% of world carbon dioxide emissions. According to Vanderley et al. the traditional mitigation strategies for CO₂ emissions in the cement industry are not sufficient to ensure the necessary mitigation in a scenario of increasing cement demand. Therefore, the adoption of expensive and environmentally risky carbon capture and storage (CCS) has been considered an unavoidable solution by cement industry leaders.

Hence, there remains a need to develop affordable filler technology which can combine both the CO₂ emission reduction achieved by reduced cement production and the CO₂ emission reduction achieved by carbon capture technology and which does not detrimentally affect the properties of concrete.

Feng, Jingjing, Jianwei Sun, and Peiyu Yan. "The influence of ground fly ash on cement hydration and mechanical property of mortar." Advances in Civil Engineering 2018 (2018) concerns the use of milled fly ash in concrete. It describes ground fly ash having a specific surface area of 0.651 m²/kg.

It is an object of the present invention to provide improved fillers for cement or asphalt binder.

It is a further object of the present invention to provide improved fillers for cement or asphalt binder which are cheap to produce.

It is a further object of the present invention to provide improved fillers for cement or asphalt binder which are produced using CO₂ storage technology.

It is a further object of the present invention to provide improved fillers for cement or asphalt binder which improve the properties of the resulting concrete, such as the compressive strength.

### Summary of the invention

The scope of the invention is set out by the appended set of claims. In a first aspect the present invention provides a mechanochemically carboxylated fly ash which has a BET surface area of less than 50 m²/g and a CO₂ content of more than 1 wt.%, wherein the CO₂ content is determined as the mass loss above 120°C measured by TGA-MS employing a temperature trajectory wherein the temperature was increased from room temperature to 800°C at a rate of 10 °C/min and then decreased to room temperature at a rate of 15 °C/min, and a D50 within the range of 0.5-50 µm.

As will be shown in the appended examples, it was found that when such a mechanochemically carboxylated fly ash is used as a filler in cement the compressive strength of the resulting concrete is surprisingly increased beyond the values obtained when pure cement is employed. In addition, the set time for the strength development is decreased. Furthermore, a much higher amount of this mechanochemically carboxylated fly ash can be used as a filler while still resulting in acceptable concrete properties.

Additionally, the production of said mechanochemically fly ash filler relies on a cheap CO₂ capture technology platform, such that a filler is provided which can be produced in an economically viable manner and which combines both the CO₂ emission reduction achieved by reduced cement production and the CO₂ emission reduction achieved by carbon capture technology.

It was furthermore found that the durability of the concrete produced using said mechanochemically fly ash filler is considerably increased. Without wishing to be bound by any theory, the present inventors believe that this is due to enhanced micro and sub-microscale hydration, a reduced chloride permeability and/or reduced porosity of the concrete. Finally, the increased oxygen content as compared to untreated feedstocks may result in better dispersion in polar solvents, and better compatibility with materials that have epoxy and carboxyl functional groups.

In a further aspect, the invention provides a method for the mechanochemically carboxylated fly as described herein, comprising the following steps:
a) providing a solid feedstock comprising or consisting of fly ash, wherein the solid feedstock is a particulate material which has a BET surface area of more than 0.01 m²/g and a D50 within the range of 0.1-5000 µm;
b) providing an oxidizing gas comprising CO₂;
c) introducing said solid feedstock and said oxidizing gas into a mechanical agitation unit; and
d) subjecting the material of said solid feedstock to a mechanical agitation operation in the presence of said oxidizing gas in said mechanical agitation unit at an oxidizing gas pressure of more than 1 atm to obtain the mechanochemically carboxylated fly ash.

In another aspect the invention provides the mechanochemically carboxylated fly ash described herein obtainable by the method for producing mechanochemically carboxylated fly ash described herein.

In another aspect the invention provides a composition comprising the mechanochemically carboxylated fly ash as described herein and a further material selected from the group consisting of asphalt, cement, polymers and combinations thereof.

In another aspect the invention provides a method for preparing a composition as described herein, said method comprising the following steps:
(i) providing a mechanochemically carboxylated fly ash as described herein;
(ii) providing a further material selected from the group consisting of asphalt, cement, polymers and combinations thereof; and
(iii) combining the mechanochemically carboxylated fly ash of step (i) with the material of step (ii).

In another aspect the invention provides a method for preparing concrete, said method comprising the following steps:
(i) providing a composition as described herein wherein the further material is asphalt or concrete;
(ii) providing a construction aggregate; and
(iii) contacting, preferably mixing the composition of step (i) with the construction aggregate of step (ii).

In another aspect the invention provides concrete obtainable by the method for preparing concrete described herein.

In another aspect the invention provides the use of a mechanochemically carboxylated fly ash as described herein:
- as a filler, preferably as a filler in a material selected from the group consisting of asphalt, cement, polymers and combinations thereof;
- as a partial replacement for asphalt or cement in concrete;
- to increase the compressive strength of concrete;
- to improve the durability of concrete; or
- to improve the durability of concrete by reducing chloride permeability and/or porosity.

### Description of embodiments

In a first aspect the invention provides a mechanochemically carboxylated fly ash which has a BET surface area of less than 50m²/g and a CO₂ content of more than 1 wt.%, wherein the CO₂ content is determined as the mass loss above 120°C measured by TGA-MS employing a temperature trajectory wherein the temperature was increased from room temperature to 800°C at a rate of 10 °C/min and then decreased to room temperature at a rate of 15 °C/min, and a D50 within the range of 0.5-50 µm.

In accordance with the invention, the BET surface area, the BJH desorption cumulative surface area of pores and the desorption average pore width (4V/A by BET) as referred to herein are determined at a temperature of 77K using a sample mass of 0.5-1g. A preferred analysis method to determine the BET surface area, the BJH desorption cumulative surface area of pores and the desorption average pore width (4V/A by BET) comprises heating samples to 400 °C for a desorption cycle prior to surface area analysis.

TGA-MS as used herein refers to Thermogravimetric Analysis coupled to Mass Spectrometry, a technique known to the person skilled in the art. A preferred TGA-MS apparatus setup to determine the CO₂ content of the feedstocks and mechanochemically carboxylated materials in the context of the present invention is a Setaram TAG 16 TGA/DSC dual chamber balance coupled to an Ametek Dycor Proline MS employing a 0.1-2 mg sample
In preferred embodiments the mechanochemically carboxylated fly ash has one, two or three, preferably three of the following characteristics:
- a SiO₂ content of less than 50 wt.% (by total weight of the mechanochemically carboxylated fly ash);
- an Al₂O₃ content of less than 20% (by total weight of the mechanochemically carboxylated fly ash);
- an Fe₂O₃ content of more than 10% (by total weight of the mechanochemically carboxylated fly ash).

In preferred embodiments the mechanochemically carboxylated fly ash has one, two or three, preferably three of the following characteristics:
- a SiO₂ content of more than 30 wt.% (by total weight of the mechanochemically carboxylated fly ash), preferably more than 40 wt.%;
- an Al₂O₃ content of more than 10wt.% (by total weight of the mechanochemically carboxylated fly ash), preferably more than 15 wt.%;
- an Fe₂O₃ content of less than 40wt.% (by total weight of the mechanochemically carboxylated fly ash), preferably more than 30 wt.%.

In highly preferred embodiments the mechanochemically carboxylated fly ash has one, two or three, preferably three of the following characteristics:
- a SiO₂ content within the range of 30-50 wt.% (by total weight of the mechanochemically carboxylated fly ash);
- an Al₂O₃ content within the range of 10-20wt.% (by total weight of the mechanochemically carboxylated fly ash);
- an Fe₂O₃ content within the range of 10-40wt.% (by total weight of the mechanochemically carboxylated fly ash).

A preferred method of determining the mineral content, such as the SiO₂, Al₂O₃, Fe₂O₃ or CaO content is by X-ray fluorescence spectroscopy, preferably employing a Bruker Tracer 5G. As will be understood by the skilled person, the SiO₂, Al₂O₃, Fe₂O₃ and CaO content of both the raw feedstock and the mechanochemically carboxylated fly ash referred to herein is preferably determined using X-ray fluorescence spectroscopy as described herein.

In embodiments of the invention, the particle size distribution of the mechanochemically carboxylated fly ash has one, two, three or all, preferably all, of the following characteristics:
- a D10 within the range of 0.005-5 µm, preferably 0.01-1 µm, most preferably 0.1-0.5 µm;
- a D50 within the range of 1-25 µm, most preferably 1-10 µm;
- a D90 within the range of 5-200 µm, preferably 20-100 µm, most preferably 30-50 µm;
- a D(4:3) within the range of 1-100 µm, preferably 10-25 µm.

In accordance with the invention, the particle size distribution characteristics such as D10, D50, D90 and D(4:3) are determined by measuring with a laser light scattering particle size analyzer utilizing the Fraunhofer theory of light scattering, such as the Fritsch Analysette 22 Nanotec or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles. As is known to the skilled person, the D(4:3) is the volume mean diameter.

In embodiments of the invention, the mechanochemically carboxylated fly ash has a density of more than 2.5 g/cm³, preferably more than 2.7 g/cm³, more preferably more than 3 g/cm³.

In preferred embodiments of the invention, the mechanochemically carboxylated fly ash has a density of more than 2.5 g/cm³, a D10 of less than 1µm, a D50 of less than 10 µm and a D90 of less than 50 µm.

In a further aspect, the invention provides a method for producing the mechanochemically carboxylated fly as described herein, comprising the following steps:
a) providing a solid feedstock comprising or consisting of fly ash, wherein the solid feedstock is a particulate material which has a BET surface area of more than 0.01 m²/g and a D50 within the range of 0.1-5000 µm;
b) providing an oxidizing gas comprising CO₂;
c) introducing said solid feedstock and said oxidizing gas into a mechanical agitation unit; and
d) subjecting the material of said solid feedstock to a mechanical agitation operation in the presence of said oxidizing gas in said mechanical agitation unit at an oxidizing gas pressure of more than 1 atm to obtain the mechanochemically carboxylated fly ash.

It is within the capacity of one skilled in the art, in light of the guidance provided in the present disclosure, to adapt the relevant process parameters such that a mechanochemically carboxylated fly ash is obtained which has the properties recited herein.

In preferred embodiments of the invention, the BET surface area of the mechanochemically carboxylated fly ash is at least 110%, preferably at least 120%, more preferably at least 150%, of the BET surface area of the solid feedstock.

Without wishing to be bound by any theory, the present inventors believe that the BET surface area increase observed with the mechanochemical carboxylation of fly ash in accordance with the present invention may largely be attributed to an increase in the number of pores, observed by a decrease in the average pore width and an increase in the total pore surface area. Hence, in embodiments of the invention, the BJH desorption cumulative surface area of pores of the mechanochemically carboxylated fly ash is at least 110%, preferably at least 120%, more preferably at least 150%, of the BJH desorption cumulative surface area of pores of the solid feedstock and the desorption average pore width (4V/A by BET) of the mechanochemically carboxylated fly ash is no more than 90%, preferably no more than 85%, more preferably no more than 80%, of the desorption average pore width (4V/A by BET) of the solid feedstock.

In preferred embodiments of the invention, the Fe₂O₃ content of the mechanochemically carboxylated fly ash is at least 150%, preferably at least 200%, most preferably at least 250% of the Fe₂O₃ content of the solid feedstock.

In preferred embodiments of the invention, the CO₂ content of the mechanochemically carboxylated fly ash is more than 2 wt.% (by total weight of the mechanochemically carboxylated fly ash), preferably more than 5 wt.%, most preferably more than 7 wt.%, wherein the CO₂ content is determined as the mass loss above 120°C measured by TGA-MS employing a temperature trajectory wherein the temperature was increased from room temperature to 800°C at a rate of 10 °C/min and then decreased to room temperature at a rate of 15 °C/min.

In highly preferred embodiments of the invention, the CO₂ content of the solid feedstock is less than 0.5 wt.% (by total weight of the solid feedstock), preferably less than 0.2 wt.%, most preferably less than 0.1 wt.%, wherein the CO₂ content is determined as the mass loss above 120°C measured by TGA-MS employing a temperature trajectory wherein the temperature was increased from room temperature to 800°C at a rate of 10 °C/min and then decreased to room temperature at a rate of 15 °C/min.

The term "fly ash" as used herein refers to any type of fly ash, including coal fly ash and oil fly ash. Without wishing to be bound by any theory, the present inventors have found that improved performance can be obtained when the solid feedstock is low in carbonaceous fly ash. Carbonaceous fly ash is a particularly characteristic kind of fly ash which constitutes a large portion of the oil fly-ash.

Hence, in preferred embodiments the fly ash is coal fly ash, such as lignite coal fly ash, subbituminous coal fly ash, anthracite coal fly ash, bituminous coal fly ash and combinations thereof. In highly preferred embodiments of the invention, the solid feedstock comprises or consists of fly ash which meets the ASTM C618 (2019) requirements, preferably fly ash which meets the class C ASTM C618 (2019) requirements.

In embodiments, the solid feedstock has a combined SiO₂, Al₂O₃ and Fe₂O₃ content of more than 60 wt.% (by total weight of the solid feedstock), preferably more than 70 wt.%, more preferably more than 75 wt.%.

Without wishing to be bound by any theory, the present inventors have found that improved mechanochemical carboxylation and filler performance results are obtained when the feedstock comprises at least some CaO. Thus, in embodiments of the invention, the solid feedstock comprises more than 0.5 wt.% (by total weight of the solid feedstock), preferably more than 1 wt.%, more preferably more than 3 wt.% CaO. In preferred embodiments of the invention, the solid feedstock comprises more than 5 wt.% (by total weight of the solid feedstock) or more than 8 wt.% CaO.

In embodiments of the invention, the particle size distribution of the solid feedstock has one, two, three or all, preferably all, of the following characteristics:
- a D10 within the range of 0.1-50 µm, preferably 0.5-20 µm, most preferably 1-10 µm;
- a D50 within the range of 1-200 µm, preferably 5-100 µm, most preferably 10-50 µm;
- a D90 within the range of 50-700 µm, preferably 50-500 µm, most preferably 60-400 µm;
- a D(4:3) within the range of 10-200 µm, preferably 20-130 µm.

In embodiments of the invention, the oxidizing gas provided in step (b) comprises more than 80mol% CO₂, preferably more than 95 mol% CO₂. In preferred embodiments of the invention, the oxidizing gas provided in step (b) comprises more than 80mol% CO₂, preferably more than 95 mol% CO₂ and less than 1000 ppm (v/v) H₂O, preferably less than 100 ppm (v/v) H₂O.

In embodiments of the invention, step (d) is performed at a pressure of more than 3 atm, preferably more than 6 atm. In embodiments of the invention, step (d) is performed at a temperature of less than 100°C, preferably less than 60°C, more preferably less than 30°C. In embodiments of the invention, step (d) is performed for at least 1 hour, preferably for at least 4 hours, more preferably for at least 8 hours. In preferred embodiments of the invention, step (d) is performed at a pressure of more than 3 atm, preferably more than 6 atm; at a temperature of less than 100°C, preferably less than 60°C, more preferably less than 30°C; and for at least 1 hour, preferably for at least 4 hours, more preferably for at least 8 hours.

The present inventors have furthermore found that the mechanochemical carboxylation methods described herein may advantageously be performed without employing additional oxidizing agents such as acids. Hence, the mechanochemical carboxylation methods described herein are preferably performed without employing a strong acid, preferably without employing any further oxidizing agent other than the oxidizing gas provided in step (b).

In preferred embodiments of the invention, the mechanochemical agitation operation of step (d) comprises grinding, milling, mixing, stirring (low-speed stirring or high-speed stirring), shearing (high-torque shearing), shaking, blending, a fluidized bed or ultrasonication, preferably grinding, milling, mixing, stirring (low-speed stirring or high-speed stirring), shearing (high-torque shearing), ultrasonication. The present inventors have found that the mechanochemical carboxylation process is facilitated if the mechanochemical agitation operation of step (d) the mechanochemical agitation operation of step (d) is performed in the presence of inert grinding or milling media, preferably inert balls or beads. A preferred inert material is stainless steel.

In preferred embodiments of the invention, step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides and combinations thereof.

Hence, as will be understood from the above, in highly preferred embodiments of the invention, step (d) comprises a mechanical agitation operation, preferably grinding, milling, mixing, stirring (low-speed stirring or high-speed stirring), shearing (high-torque shearing), shaking, blending, a fluidized bed or ultrasonication, in the presence of inert grinding or milling media and a transition metal oxide catalyst. The present inventors have found that it is advantageous with a view to the efficiency of the mechanochemical carboxylation (e.g. reaction time, CO₂ absorption and particle size reduction) to employ inert media as described herein before coated with said transition metal oxide catalyst.

In another aspect the invention provides the mechanochemically carboxylated fly ash described herein obtainable by the method for producing mechanochemically carboxylated fly ash described herein.

As will be understood by the skilled person in light of the present disclosure, the mechanochemically carboxylated fly ash of the present invention constitutes an excellent filler for many applications, combining distinct mechanical properties with a cost-efficient CO₂ capture technology.

Hence, in another aspect the invention provides a composition comprising a mechanochemically carboxylated fly ash as described herein and a further material selected from the group consisting of asphalt, cement, polymers and combinations thereof.

In embodiments, the further material is a polymer selected from thermoplastic polymers and thermosetting polymers. In preferred embodiments, the further component is a polymer selected from the group consisting of epoxide resin, phenol-formaldehyde resin, polyethylene terephthalate, aromatic polyamide, polyacrylonitrile, polyimide, aromatic polyester, polyethylene, polypropylene, polyurethane, polyisocyanurate, polyamide, polyether, polyester, polyhydroxyalkanoate, polylactic acid, polyvinylidene fluoride, polyvinyl acetate, polyvinyl chloride, polystyrene, polytetrafluoroethylene, acrylonitrile-butadiene-styrene, nitrile rubber, styrenebutadiene, ethylene-vinyl acetate and combinations thereof. The term "polymer" as used herein includes copolymers, such as block copolymers.

In highly preferred embodiments the further material is selected from cement, asphalt or combinations thereof.

In accordance with the invention, the cement may be a hydraulic or non-hydraulic cement. In preferred embodiments, the cement is a hydraulic cement, such as Portland cement. In highly preferred embodiments of the invention, the cement is one of the cements defined in EN197-1 (2011), preferably Portland cement as defined in EN197-1 (2011).

In embodiments of the invention, the composition comprises more than 0.1 wt.% (by total weight of the composition), preferably more than 1 wt.%, more preferably more than 5 wt.% of the mechanochemically carboxylated fly ash and/or more than 0.1 wt.% (by total weight of the composition), preferably more than 1 wt.%, more preferably more than 20 wt.% of the further material.

In embodiments of the invention, the composition comprises less than 60 wt.% (by total weight of the composition), preferably less than 50 wt.%, more preferably less than 45 wt.% of the mechanochemically carboxylated fly ash and/or less than 95 wt.% (by total weight of the composition), preferably less than 90 wt.%, more preferably less than 80 wt.% of the further material.

In embodiments of the invention, the composition is provided wherein the weightweight ratio of the mechanochemically carboxylated fly ash to the further material is within the range of 1:9 to 2:1, preferably within the range of 1:8 to 1:1, more preferably within the range of 1:6 to 5:6.

In embodiments of the invention, the composition comprises 5-70 wt.% (by total weight of the composition), preferably 10-60 wt.%, more preferably 20-50 wt.% of the mechanochemically carboxylated fly ash and 30-95 wt.% (by total weight of the composition), preferably 40-90 wt.%, preferably 50-80 wt.% of the further material.

In embodiments of the invention, the composition comprises less than 5 wt.% (by total weight of the composition water, preferably less than 1 wt.%, more preferably less than 0.1 wt.%. The amount of water can suitably be determined as the mass loss up to 120°C measured by TGA-MS employing a temperature trajectory wherein the temperature was increased from room temperature to 800°C at a rate of 10 °C/min.

In embodiments of the invention, the composition consists of the mechanochemically carboxylated fly ash and the further material.

In another aspect the invention provides a method for preparing a composition as described herein, said method comprising the following steps:
(i) providing a mechanochemically carboxylated fly ash as described herein;
(ii) providing a further material selected from the group consisting of asphalt, cement, polymers and combinations thereof;
(iii) combining the mechanochemically carboxylated fly ash of step (i) with the material of step (ii).

In another aspect the invention provides a method for preparing concrete, said method comprising the following steps:
(i) providing a composition as described herein wherein the further material is asphalt or cement;
(ii) providing a construction aggregate;
(iii) contacting, preferably mixing the composition of step (i) with the construction aggregate of step (ii).

In another aspect the invention provides concrete obtainable by the method for preparing concrete described herein.

In embodiments of the invention, the construction aggregate is selected from the group consisting of sand, gravel, crushed stone, slag, recycled concrete, clay, pumice, perlite, vermiculite and combinations thereof. In preferred embodiments the construction aggregate is one of the aggregates defined in EN 13043 (2002), EN 13383 (2019), EN 12620 (2013) or EN 13242 (2013), preferably the construction aggregate is one of the aggregates defined in EN 12620 (2013).

In preferred embodiments of the invention, step (iii) further comprises contacting, preferably mixing the composition of step (i) with the construction aggregate of step (ii) and water. In accordance with the invention, the composition of step (i), the construction aggregate of step (ii) and the water may be contacted, preferably mixed at substantially the same time, or in a step-wise manner wherein the composition of step (i) is first contacted, preferably mixed with water, before being contacted, preferably mixed with the construction aggregate of step (ii).

In another aspect the invention provides the use of a mechanochemically carboxylated fly ash as described herein:
- as a filler, preferably as a filler in a material selected from the group consisting of asphalt, cement, polymers and combinations thereof;
- as a partial replacement for asphalt or cement in concrete;
- to increase the compressive strength of concrete;
- to improve the durability of concrete; or
- to improve the durability of concrete by reducing chloride permeability and/or porosity.

It will be understood by the skilled person that the embodiments of the invention described herein in the context of the mechanochemically carboxylated fly ash or the composition, especially in relation to the features of the mechanochemically carboxylated fly ash or in relation to the features of the further material, are equally applicable to the method for preparing said composition described herein, the method for preparing concrete described herein and the uses of the mechanochemically carboxylated fly ash described herein.

### Examples

The BET surface area, the BJH desorption cumulative surface area of pores and the desorption average pore width (4V/A by BET) were determined at a temperature of 77K using a sample mass of 0.5-1g wherein samples were heated to 400 °C for a desorption cycle prior to surface area analysis.

Particle Size Distribution measurements were carried out on a Fritsch Analysette 22 Nanotec using Fraunhofer diffraction theory.

The mineral content (SiO₂, Al₂O₃, Fe₂O₃ and CaO) was determined by X-ray fluorescence spectroscopy employing a Bruker Tracer 5G.

The CO₂ content was determined as the mass loss above 120°C measured by TGA-MS employing a temperature trajectory wherein the temperature was increased from room temperature to 800°C at a rate of 10 °C/min and then decreased to room temperature at a rate of 15 °C/min employing a Setaram TAG 16 TGA/DSC dual chamber balance coupled to an Ametek Dycor Proline MS and a 0.1-2 mg sample.

Compressive strength was tested in accordance with ISO 1920:2005, part 4.

### Example 1

Mechanochemically carboxylated fly ash was produced by inserting a 10 gram sample of fly ash into a pressure cell with 500 grams of inert media (stainless steel balls) coated with titanium dioxide. The cell is pressurized to 1 MPa (9.87 atm), placed in a high energy ball mill for and rotated at 5000 RPM for 48 hours. The reaction was initiated at room temperature and no heating or cooling was applied.

### Example 2

Two raw fly ash samples A and B were mechanochemically carboxylated ('treated') with a process according to example 1, wherein the mechanical agitation and CO₂ pressure were adapted such that a product with the characteristics set out in the below table was obtained. Raw sample A was obtained from the Gennessee, Alberta (Canada) coal plant and complies with class F ASTM C618 (2019) requirements. Raw sample B was obtained from the Civita Vecchia (Italy) coal plant. Raw sample C was obtained from the Cordemais (France) coal plant. The raw fly ash of samples B and C are generally considered an inferior fly ashes which are unsuitable for use as a concrete filler at concentrations above 10wt.%.

| | A - raw | A - Treated | B - raw | B - treated | C - raw | C - treated |
|---|---|---|---|---|---|---|
| Density (g/cm³) | 209 | 3.06 | 2.36 | 2.79 | 2.25 | 2.33 |
| CO₂ (wt.%) | <0.1 | 9 | <0.1 | 6 | 0.1 | 4 |
| SiO₂ (wt.%) | 56.39 | 39.45 | 54.71 | 45.92 | 53.76 | 45.95 |
| Al₂O₃ (wt.%) | 23.71 | 16.31 | 22.42 | 18.91 | 25.23 | 21.37 |
| Fe₂O₃ (wt.%) | 3.55 | 24.74 | 6.59 | 14.63 | 5.58 | 15.08 |
| CaO (wt.%) | 9.3 | 6.4 | 5.11 | 4.28 | 3.58 | 308 |
| D10 (µm) | 3.8 | 0.2 | 2.6 | 0.2 | 6.5 | 0.1 |
| D50 (µm) | 29.6 | 8.4 | 14.9 | 7 | 39.2 | 5.5 |
| D90 (µm) | 143.3 | 46.9 | 68 | 37.8 | 358 | 35.2 |
| D(4;3) (µm) | 56.51 | 20.38 | 26.87 | 13.8 | 114.83 | 15.11 |
| BET surface area (m²/g) | 16.1858 | 32.2091 | 2.95 | 5.55 | 5.5 | 9.8 |
| Desorption avg pore width (4V/A by BET) (nm) | 12.3 | 8.6 | n.d. | n.d. | n.d. | n.d. |
| BJH desorption cumulative surface area of pores (m²/g) | 24.1221 | 43.9139 | n.d. | n.d. | n.d. | n.d. |

| | | | | | | |
|---|---|---|---|---|---|---|
| n.d. = not determined | | | | | | |

The mechanochemically carboxylated fly ashes A and B were used as a filler by mixing with portland cement at a weightweight ratio of 1:5 (filler:cement).

The obtained mixtures of mechanochemically carboxylated fly ashes and portland cement were each mixed with fine gravel and water (employing identical ratios for every sample) to obtain a concrete slurry. The compressive strength of the resulting concrete was monitored after 2, 7 and 28 days.

For comparison, a similar concrete slurry was prepared using raw fly ashes samples A and B and pure portland cement.

| Compressive strength (MPa) | 2 days | 7 days | 28 days |
|---|---|---|---|
| A - Raw | 26.6 | 39.9 | 53.0 |
| B - Raw | 26.3 | 39.3 | 54.6 |
| C - Raw | 24.9 | 36.2 | 49 |
| A - Treated | 32.2 | 42.6 | 64.1 |
| B - Treated | 32.7 | 42.7 | 66.2 |
| C - Treated | 30.3 | 45.4 | 62.8 |
| Portland cement | 34.1 | 48.1 | 60.9 |

As can be observed from the compressive strength measurements, the mechanochemically carboxylated mineral fillers of the present invention provide an unexpectedly large performance increase compared with the raw materials (such as fly ashes). Furthermore, it was surprisingly found that the mechanochemically carboxylated mineral fillers of the present invention even outperform pure cement mixtures.

## Claims

1. A mechanochemically carboxylated fly ash which has a BET surface area of less than 50m²/g and a CO₂ content of more than 1 wt.%, wherein the CO₂ content is determined as the mass loss above 120°C measured by TGA-MS employing a temperature trajectory wherein the temperature was increased from room temperature to 800°C at a rate of 10 °C/min and then decreased to room temperature at a rate of 15 °C/min, and a D50 within the range of 0.5-50 µm.

2. Mechanochemically carboxylated fly ash according to claim 1 which has one, two or three, preferably three of the following characteristics:
• a SiO₂ content within the range of 30-50 wt.% (by total weight of the mechanochemically carboxylated fly ash);
• an Al₂O₃ content within the range of 10-20wt.% (by total weight of the mechanochemically carboxylated fly ash);
• an Fe₂O₃ content within the range of 10-40wt.% (by total weight of the mechanochemically carboxylated fly ash).

3. Mechanochemically carboxylated fly ash according to claim 1 or 2 which has one, two, three or all, preferably all, of the following characteristics:
• a D10 within the range of 0.005-5 µm, preferably 0.01-1 µm, most preferably 0.1-0.5 µm;
• a D50 within the range of 1-25 µm, most preferably 1-10 µm;
• a D90 within the range of 5-200 µm, preferably 20-100 µm, most preferably 30-50 µm;
• a D(4:3) within the range of 1-100 µm, preferably 10-25 µm.

4. Mechanochemically carboxylated fly ash according to any one of claims 1-3 which has a CO₂ content of more than 2 wt.%, preferably more than 5 wt.%.

5. A method for producing the mechanochemically carboxylated fly ash according to any one of claims 1-4, comprising the following steps:
a) providing a solid feedstock comprising or consisting of fly ash, wherein the solid feedstock is a particulate material which has a BET surface area of more than 0.01 m²/g and a D50 within the range of 0.1-5000 µm;
b) providing an oxidizing gas comprising CO₂;
c) introducing said solid feedstock and said oxidizing gas into a mechanical agitation unit; and
d) subjecting the material of said solid feedstock to a mechanical agitation operation in the presence of said oxidizing gas in said mechanical agitation unit at an oxidizing gas pressure of more than 1 atm to obtain the mechanochemically carboxylated fly ash.

6. Method according to claim 5 wherein the solid feedstock has a combined SiO₂, Al₂O₃ and Fe₂O₃ content of more than 60 wt.% (by total weight of the solid feedstock), preferably more than 70 wt.%, more preferably more than 75 wt.%.

7. Method according to claim 5 or 6 wherein the solid feedstock comprises or consists of fly ash which meets the ASTM C618 requirements, most preferably fly ash which meets the class F ASTM C618 requirements.

8. Method according to any one of claims 5-7 wherein step (d) is performed
• at a pressure of more than 3 atm, preferably more than 6 atm;
• at a temperature of less than 100°C, preferably less than 60°C, more preferably less than 30°C; and/or
• for at least 1 hour, preferably for at least 4 hours, more preferably at least 8 hours.

9. Method according to any one of claims 5-8 the mechanochemical agitation operation of step (d) comprises grinding, milling, mixing, stirring , shearing, shaking, blending, a fluidized bed or ultrasonication, preferably grinding, milling, mixing, stirring, shearing or ultrasonication.

10. Method according to any one of claims 5-9 wherein step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides and combinations thereof.

11. A composition comprising mechanochemically carboxylated fly ash according to any one of claims 1-4 and a further material selected from the group consisting of asphalt, cement, polymers and combinations thereof.

12. Composition according to claim 11 wherein the further material is cement, preferably portland cement.

13. A method for preparing concrete comprising the following steps:
(i) providing a composition according to claim 11 wherein the further material is asphalt or cement;
(ii) providing a construction aggregate;
(iii) contacting, preferably mixing the composition of step (i) with the construction aggregate of step (ii).

14. Use of the mechanochemically carboxylated fly ash according to any one of claims 1-4:
• as a filler, preferably as a filler in a material selected from the group consisting of asphalt, cement, polymers and combinations thereof;
• as a partial replacement for asphalt or cement in concrete;
• to increase the compressive strength of concrete;
• to improve the durability of concrete; or
• to improve the durability of concrete by reducing chloride permeability and/or porosity.

## Patentansprüche

1. Mechanochemisch carboxylierte Flugasche, die eine BET-Oberfläche von weniger als 50 m²/g und einen CO₂-Gehalt von mehr als 1 Gew.-% aufweist, wobei der CO₂-Gehalt als Massenverlust über 120 °C bestimmt wird, gemessen durch TGA-MS unter Verwendung einer Temperaturtrajektorie, wobei die Temperatur von Raumtemperatur auf 800 °C mit einer Geschwindigkeit von 10 °C/min erhöht und dann auf Raumtemperatur mit einer Geschwindigkeit von 15 °C/min gesenkt wurde, und einen D50 im Bereich von 0,5-50 µm.

2. Mechanochemisch carboxylierte Flugasche nach Anspruch 1, die eins, zwei oder drei, vorzugsweise drei der folgenden Merkmale aufweist:
• einen SiO₂-Gehalt im Bereich von 30-50 Gew.-% (bezogen auf das Gesamtgewicht der mechanochemisch carboxylierten Flugasche);
• einen Al₂O₃-Gehalt im Bereich von 10-20 Gew.-% (bezogen auf das Gesamtgewicht der mechanochemisch carboxylierten Flugasche);
• einen Fe₂O₃-Gehalt im Bereich von 10-40 Gew.-% (bezogen auf das Gesamtgewicht der mechanochemisch carboxylierten Flugasche).

3. Mechanochemisch carboxylierte Flugasche nach Anspruch 1 oder 2, die eins, zwei, drei oder alle, vorzugsweise alle der folgenden Merkmale aufweist:
• einen D10 im Bereich von 0,005-5 µm, vorzugsweise 0,01-1 µm, am bevorzugtesten 0,1-0,5 µm;
• einen D50 im Bereich von 1-25 µm, am bevorzugtesten 1-10 µm;
• einen D90 im Bereich von 5-200 µm, vorzugsweise 20-100 µm, am bevorzugtesten 30-50 µm;
• einen D(4:3) im Bereich von 1-100 µm, vorzugsweise 10-25 µm.

4. Mechanochemisch carboxylierte Flugasche nach einem der Ansprüche 1-3, die einen CO₂-Gehalt von mehr als 2 Gew.-%, vorzugsweise mehr als 5 Gew.-% aufweist.

5. Verfahren zum Herstellen der mechanochemisch carboxylierten Flugasche nach einem der Ansprüche 1-4, das die folgenden Schritte umfasst:
a) Bereitstellen eines festen Ausgangsmaterials, das Flugasche umfasst oder daraus besteht, wobei das feste Ausgangsmaterial ein Partikelmaterial ist, das eine BET-Oberfläche von mehr als 0,01 m²/g und einen D50 im Bereich von 0,1-5000 µm aufweist;
b) Bereitstellen eines oxidierenden Gases, das CO₂ umfasst;
c) Einleiten des besagten festen Ausgangsmaterials und des besagten oxidierenden Gases in eine mechanische Rühreinheit; und
d) Unterziehen des Materials des besagten festen Ausgangsmaterials einem mechanischen Rührvorgang in Gegenwart des besagten oxidierenden Gases in der besagten mechanischen Rühreinheit bei einem oxidierenden Gasdruck von mehr als 1 atm, um die mechanochemisch carboxylierte Flugasche zu erhalten.

6. Verfahren nach Anspruch 5, wobei das feste Ausgangsmaterial einen kombinierten SiO₂-, Al₂O₃- und Fe₂O₃-Gehalt von mehr als 60 Gew.-% (bezogen auf das Gesamtgewicht des festen Ausgangsmaterials), vorzugsweise mehr als 70 Gew.-%, besonders bevorzugt mehr als 75 Gew.-% aufweist.

7. Verfahren nach Anspruch 5 oder 6, wobei das feste Ausgangsmaterial Flugasche umfasst oder daraus besteht, die die ASTM C618-Anforderungen erfüllt, am bevorzugtesten Flugasche, die die Klasse F-ASTM C618-Anforderungen erfüllt.

8. Verfahren nach einem der Ansprüche 5-7, wobei Schritt (d) wie folgt ausgeführt wird:
• bei einem Druck von mehr als 3 atm, vorzugsweise mehr als 6 atm;
• bei einer Temperatur von weniger als 100 °C, vorzugsweise weniger als 60 °C, besonders bevorzugt weniger als 30 °C; und/oder
• für mindestens 1 Stunde, vorzugsweise für mindestens 4 Stunden, besonders bevorzugt für mindestens 8 Stunden.

9. Verfahren nach einem der Ansprüche 5-8, wobei der mechanochemische Rührvorgang aus Schritt (d) das Schleifen, Fräsen, Mischen, Rühren, Scheren, Schütteln, Vermischen, ein Fließbett oder einen Ultraschall, vorzugsweise das Schleifen, Fräsen, Mischen, Rühren, Scheren oder einen Ultraschall umfasst.

10. Verfahren nach einem der Ansprüche 5-9, wobei Schritt (d) in Gegenwart eines Katalysators, vorzugsweise eines Übergangsmetalloxidkatalysators, besonders bevorzugt eines Übergangsmetalldioxidkatalysators, am bevorzugtesten eines Übergangsmetalldioxidkatalysators ausgeführt wird, der aus der Gruppe ausgewählt ist, die aus Eisenoxiden, Kobaltoxiden, Rutheniumoxiden, Titanoxiden und Kombinationen davon besteht.

11. Zusammensetzung, die mechanochemisch carboxylierte Flugasche nach einem der Ansprüche 1-4 und ein weiteres Material umfasst, das aus der Gruppe ausgewählt ist, die aus Asphalt, Zement, Polymeren und Kombinationen davon besteht.

12. Zusammensetzung nach Anspruch 11, wobei das weitere Material Zement, vorzugsweise Portlandzement ist.

13. Verfahren zum Herstellen von Beton, das die folgenden Schritte umfasst:
(i) Bereitstellen einer Zusammensetzung nach Anspruch 11, wobei das weitere Material Asphalt oder Zement ist;
(ii) Bereitstellen eines Bauaggregats;
(iii) Inkontaktbringen, vorzugsweise Mischen der Zusammensetzung aus Schritt (i) mit dem Bauaggregat aus Schritt (ii).

14. Verwendung der mechanochemisch carboxylierten Flugasche nach einem der Ansprüche 1-4:
• als Füllmittel, vorzugsweise als Füllmittel in einem Material, das aus der Gruppe ausgewählt ist, die aus Asphalt, Zement, Polymeren und Kombinationen davon besteht;
• als teilweiser Ersatz für Asphalt oder Zement im Beton;
• um die Betondruckfestigkeit zu erhöhen;
• um die Betonhaltbarkeit zu verbessern; oder
• um die Betonhaltbarkeit durch Reduzieren der Chloriddurchlässigkeit und/oder der Porosität zu verbessern.

## Revendications

1. Cendre volante mécanochimiquement carboxylée qui a une surface BET inférieure à 50 m²/g et une teneur en CO₂ supérieure à 1 % en poids, où la teneur en CO₂ est déterminée comme la perte de masse au-dessus de 120 °C mesurée par TGA-MS employant une trajectoire de température où la température a été augmentée de la température ambiante à 800 °C à une vitesse de 10 °C/min, puis diminuée jusqu'à la température ambiante à une vitesse de 15 °C/min, et un D50 dans la plage de 0,5 à 50 µm.

2. Cendre volante mécanochimiquement carboxylée selon la revendication 1 qui a une, deux ou trois, de préférence trois des caractéristiques suivantes :
• une teneur en SiO₂ dans la plage de 30 à 50 % en poids (par rapport au poids total de la cendre volante mécanochimiquement carboxylée) ;
• une teneur en Al₂O₃ dans la plage de 10 à 20 % en poids (par rapport au poids total de la cendre volante mécanochimiquement carboxylée) ;
• une teneur en Fe₂O₃ dans la plage de 10 à 40 % en poids (par rapport au poids total de la cendre volante mécanochimiquement carboxylée).

3. Cendre volante mécanochimiquement carboxylée selon la revendication 1 ou 2 qui a une, deux, trois ou toutes, de préférence toutes, les caractéristiques suivantes :
• un D10 dans la plage de 0,005 à 5 µm, de préférence de 0,01 à 1 µm, plus préférentiellement de 0,1 à 0,5 µm;
• un D50 dans la plage de 1 à 25 µm, plus préférentiellement de 1 à 10 µm;
• un D90 dans la plage de 5 à 200 µm, de préférence de 20 à 100 µm, plus préférentiellement de 30 à 50 µm;
• un D(4:3) dans la plage de 1 à 100 µm, de préférence de 10 à 25 µm.

4. Cendre volante mécanochimiquement carboxylée selon l'une quelconque des revendications 1 à 3, qui a une teneur en CO₂ supérieure à 2 % en poids, de préférence supérieure à 5 % en poids.

5. Procédé de production de cendre volante mécanochimiquement carboxylée selon l'une quelconque des revendications 1 à 4, comprenant les étapes suivantes :
a) fournir une matière première solide comprenant ou consistant en cendre volante, où la matière première solide est un matériau particulaire qui a une surface BET supérieure à 0,01 m²/g et un D50 dans la plage de 0,1 à 5 000 µm ;
b) fournir un gaz oxydant comprenant du CO₂ ;
c) introduire ladite matière première solide et ledit gaz oxydant dans une unité d'agitation mécanique ; et
d) soumettre le matériau de ladite matière première solide à une opération d'agitation mécanique en présence dudit gaz oxydant dans ladite unité d'agitation mécanique à une pression de gaz oxydant supérieure à 1 atm pour obtenir la cendre volante mécanochimiquement carboxylée.

6. Procédé selon la revendication 5, où la matière première solide a une teneur combinée en SiO₂, Al₂O₃ et Fe₂O₃ supérieure à 60 % en poids (par rapport au poids total de la matière première solide), de préférence supérieure à 70 % en poids, plus préférablement supérieure à 75 % en poids.

7. Procédé selon la revendication 5 ou 6, où la matière première solide comprend ou consiste en cendre volante qui répond aux exigences de la norme ASTM C618, plus préférentiellement en cendre volante qui répond aux exigences de la classe F de la norme ASTM C618.

8. Procédé selon l'une quelconque des revendications 5 à 7, où l'étape (d) est effectuée
• à une pression supérieure à 3 atm, de préférence supérieure à 6 atm ;
• à une température inférieure à 100°C, de préférence inférieure à 60°C, plus préférablement inférieure à 30°C ; et/ou
• pendant au moins 1 heure, de préférence pendant au moins 4 heures, plus préférablement au moins 8 heures.

9. Procédé selon l'une quelconque des revendications 5 à 8, l'opération d'agitation mécanochimique de l'étape (d) comprend le meulage, le fraisage, le mixage, le brassage, le cisaillement, l'agitation, le mélange, un lit fluidisé ou l'ultrasonication, de préférence le meulage, le fraisage, le mixage, le brassage, le cisaillement ou l'ultrasonication.

10. Procédé selon l'une quelconque des revendications 5 à 9, où l'étape (d) est effectuée en présence d'un catalyseur, de préférence un catalyseur d'oxyde de métal de transition, plus préférablement un catalyseur de dioxyde de métal de transition, plus préférentiellement un catalyseur de dioxyde de métal de transition sélectionné parmi le groupe consistant en oxydes de fer, oxydes de cobalt, oxydes de ruthénium, oxydes de titane et des combinaisons de ceux-ci.

11. Composition comprenant de la cendre volante mécanochimiquement carboxylée selon l'une quelconque des revendications 1 à 4 et un matériau supplémentaire sélectionné parmi le groupe consistant en asphalte, ciment, polymères et des combinaisons de ceux-ci.

12. Composition selon la revendication 11, où le matériau supplémentaire est du ciment, de préférence du ciment Portland.

13. Procédé de préparation de béton comprenant les étapes suivantes :
(i) fournir une composition selon la revendication 11, où le matériau supplémentaire est de l'asphalte ou du ciment ;
(ii) fournir un agrégat de construction ;
(iii) mettre en contact, de préférence mixer la composition de l'étape (i) avec l'agrégat de construction de l'étape (ii).

14. Utilisation de la cendre volante mécanochimiquement carboxylée selon l'une quelconque des revendications 1 à 4 :
• comme une charge, de préférence comme une charge dans un matériau sélectionné parmi le groupe consistant en asphalte, ciment, polymères et des combinaisons de ceux-ci ;
• comme un remplacement partiel de l'asphalte ou du ciment dans le béton ;
• pour augmenter la résistance à la compression du béton ;
• pour améliorer la durabilité du béton ; ou
• pour améliorer la durabilité du béton en réduisant la perméabilité de chlorure et/ou la porosité.
